# EUROPEAN PATENT APPLICATION

(11) **EP 4 418 419 A1**
(43) Date of publication of application: **21.08.2024**
(21) Application number: 23157377.5
(22) Date of filing: 17.02.2023
(51) Int. Cl.: H01M 50/209, H01M 50/249, H01M 50/291, H01M 50/35

(54) **BATTERY MODULE HAVING STORAGE FOR VENTING PARTICLES**

(71) Applicant: Samsung SDI Co., Ltd., Yongin-si, Gyeonggi-do 17084 (KR)
(72) Inventor: Reinprecht, Wolfgang, 8144 Attendorf (AT)
(74) Representative: Gulde & Partner

(57) **Abstract**

Disclosed is a battery module comprising a battery cell stack with a plurality of stacked battery cells each having a venting outlet; a venting space extending along the battery cell stack, each of the venting outlets opening into the venting space; a degassing space extending besides the venting space; a plurality of separators arranged within the venting space and sub-dividing the venting space into a plurality of venting channels being gas-tightly separated from each other by the separators. Each of the venting channels has a venting channel opening, which opens into the degassing space. The degassing space is at least partly confined by a wall comprising a collection area. The collection area being arranged opposite to each of the venting channel openings and spaced apart from each of the venting channel openings. The disclosure further refers to a battery system and a vehicle using the battery module described above.

## Description

### Field of the Disclosure

The present disclosure relates to a battery module having a storage for venting particles. The present disclosure is further related to a battery system comprising the battery module. Also, the present disclosure refers to a vehicle comprising the battery modules and/or the battery system.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle additionally powered by for example a gasoline generator or a hydrogen fuel power cell. Furthermore, the vehicle may include a combination of an electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as a power supply for small electronic devices, such as cellular phones, notebook computers and camcorders, while high-capacity rechargeable batteries are used as a power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e. g., cylindrical or prismatic (such as a prism with a rectangular or hexagonal base), depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle or fully electric vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or cells connected in series that are connected in parallel (*XsYp*).

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

A battery system may further include a battery management system (BMS), which is any electronic system that manages the rechargeable battery, battery module and battery pack, such as by protecting the batteries from operating outside their safe operating area, monitoring their states, calculating secondary data, reporting that data, controlling its environment, authenticating it and/or balancing it. For example, the BMS may monitor the state of the battery as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, a BMS may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. The BMS may be also distributed, wherein a BMS board is installed at each cell, with just a single communication cable between the battery and a controller. Or the BMS may be of modular construction including a few controllers, each handling a certain number of cells, with communication between the controllers. Centralized BMSs are most economical, least expandable, and are plagued by a multitude of wires. Distributed BMSs are the most expensive, simplest to install, and offer the cleanest assembly. Modular BMSs offer a compromise of the features and problems of the other two topologies.

A BMS may protect the battery pack from operating outside its safe operating area. Operation outside the safe operating area may be indicated in case of over-current, over-voltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as through heaters, fans, air conditioning or liquid cooling.

The mechanical integration of such a battery pack requires appropriate mechanical connections between the individual components, e. g., of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually comprise a battery housing that serves as enclosure to seal the battery system against the environment and provides structural protection of the battery system's components.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge, SoC, potential electrical performance, charging ability and internal resistance as well as actual or predicted power demands or surpluses of the consumers. Therefore, battery systems usually comprise a battery management system, BMS, for obtaining and processing such information on system level and further a plurality of battery module managers, BMMs, which are part of the system's battery modules and obtain and process relevant information on module level. Particularly, the BMS usually measures the system voltage, the system current, the local temperature at different places inside the system housing, and the insulation resistance between live components and the system housing. Additionally, the BMMs usually measure the individual cell voltages and temperatures of the battery cells in a battery module.

To provide thermal control of the battery pack, an active or passive thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/dissipating heat from the cells is required.

Exothermic decomposition of cell components may lead to a thermal event, and in particular, to a so-called thermal runaway. In general, thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. These exothermic reactions include combustion of flammable gas compositions within the battery pack housing. For example, when a cell is heated above a critical temperature (typically above 150°C) it can transit into a thermal runaway. The initial heating may be caused by a local failure, such as a cell internal short circuit, heating from a defect electrical contact, short circuit to a neighboring cell. During the thermal runaway, a failed battery cell, i. e., a battery cell which has a local failure, may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore burnable and potentially toxic. The vented gas also causes a gas-pressure increase inside the battery pack.

Furthermore, internal parts of internal members of an affected battery cell may melt in the course of a thermal runaway, whereas dust comprising solid particles such as metallic (e. g., copper) and/or graphite particles may be generated. The dust is then ejected together with the venting gas and may deteriorate or even destroy electric installations (such as terminals of the battery cells) within the battery module or even outside the battery module after being discharged from the latter. Also, due to the dust comprising metallic and/or graphite particles, short circuits and/or arcs may be caused due to resistive shorts between high voltage parts within the battery module or battery pack or between high voltage parts and the chassis of the vehicle, which imposes a series risk for the safety of people in the vicinity of the vehicle. Thus, it is of the utmost importance to avoid such short circuits and/or arcs between members within the battery module or battery pack and also between high voltage parts of the battery system and the chassis.

Thermal propagation is the event, when a thermal runaway occurring within a certain individual cell initiates thermal runaway in other cell(s), e. g., in the neighbored battery cells. This may lead to a kind of chain reaction, in which the entire battery pack and, possibly, its surrounding (e. g., the vehicle) burn down.

State of the art venting design of a battery system is to exploit the free space (expansion volume) inside a battery cell stack such that the vent gas can follow down the free space to the exit of the battery pack into the free ambient air. Before being discharged into the ambient air, the vent gas passes a venting valve, which serves as a final "door" for the venting gas to the outside of the battery pack. A battery system is considered robust in case of thermal propagation if the vent gas or smoke outside the battery pack is not ignited and thus will not cause a fire event, at least over a certain (predefined) period of time. However, in modern battery modules, in particular in battery modules configured for the use in hybrid vehicles, the expansion volume often is not sufficient, which increases, e. g., the risk of short circuits and arcs.

There is thus a need for a battery module, a battery pack, and vehicles using one or both of the latter, which is configured to avoid or at least considerably reduce the risk of short circuits and/or arcs between members within the battery module or battery pack and also between high voltage parts of the battery system and the chassis of the vehicle.

It is thus an object of the present disclosure as defined by the independent claims to overcome or reduce at least some of the drawbacks of the prior art and to provide a battery module, a battery pack, and a vehicle using the same, wherein the battery module, the battery pack, and the vehicle are each configured to avoid or at least considerably reduce the risk of short circuits and/or arcs between members within the battery module or battery pack and also between high voltage parts of the battery system and the chassis of the vehicle.

### Summary of Invention

The invention is defined by the appended claims. The description that follows is subjected to this limitation. Any disclosure lying outside the scope of said claims is only intended for illustrative as well as comparative purposes.

A first aspect of the present disclosure relates to a battery module comprising: a battery cell stack, the battery cell stack comprising a plurality of battery cells (preferably each of the battery cells having a prismatic shape) being arranged along a first direction; each of the battery cells having a venting side; each of the venting sides facing into a second direction, the second direction being oriented non-parallel to the first direction, each of the venting sides comprising a venting outlet; a venting space extending along the battery cell stack adjacent to the venting sides, each of the venting outlets opening into the venting space; a degassing space extending along the first direction besides the venting space; a plurality of separators arranged within the venting space and sub-dividing the venting space into a plurality of venting channels arranged (preferably arranged consecutively) along the first direction and being gas-tightly separated from each other by the separators, wherein each of the venting channels has a venting channel opening, which opens into the degassing space; wherein the degassing space is at least partly confined by a wall comprising a collection area, the collection area being arranged opposite to each of the venting channel openings and spaced apart from each of the venting channel openings.

A second aspect of the present disclosure relates to a battery system comprising one or more battery modules according to the first aspect.

A third aspect of the present disclosure refers to vehicle comprising at least one battery module according to the first aspect and/or at least one battery system according to the second aspect.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates schematically, in a perspective view, a battery cell that may be used with embodiments of the battery module according to the present invention;
- Fig. 2: illustrates a schematic cross-section of a battery module according to an embodiment of the invention;
- Fig. 3: illustrates a further schematic cross-section of the battery module according to the embodiment presented in Fig. 2, the cross-section taken through the venting space;
- Fig. 4: illustrates still a further schematic cross-sectional view of the battery module according to the embodiment shown in Figs. 2 and 3.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

In the following description of embodiments of the present disclosure, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the y-axis. For example, an upper cover is positioned at an upper part of the y-axis, whereas a lower cover is positioned at a lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e. g., rotated 90 degrees or at other orientations) and the spatially relative descriptors used herein should be interpreted accordingly.

In the following description of embodiments of the present disclosure, the terms of a singular form may include plural forms unless the context clearly indicates otherwise.

Features of the disclosed concept and methods of accomplishing the same may be understood more readily by reference to the following detailed description of embodiments and the accompanying drawings. Hereinafter, example embodiments will be described in more detail with reference to the accompanying drawings. The subject-matter of the present disclosure, however, may be embodied in various different forms, and should not be construed as being limited to only the illustrated embodiments herein. Rather, these embodiments are provided as examples so that this disclosure will be thorough and complete and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof will not be repeated.

The electronic or electric devices and/or any other relevant devices or components according to embodiments of the present disclosure described herein may be implemented utilizing any suitable hardware, firmware (e. g., an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e. g., on a PCB or another kind of circuit carrier. The conducting elements may comprise metallization, e. g., surface metallizations and/or pins, and/or may comprise conductive polymers or ceramics. Further electrical energy might be transmitted via wireless connections, e. g., using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as a random-access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

A first aspect of the present disclosure is related to a battery module. The battery module comprises: A battery cell stack, the battery cell stack comprising a plurality of battery cells (preferably each of the battery cells having a prismatic shape) being arranged along a first direction. Each of the battery cells has a venting side. Each of the venting sides faces into a second direction, the second direction being oriented non-parallel to the first direction. Each of the venting sides comprises a venting outlet. A venting space extends along the battery cell stack adjacent to the venting sides, each of the venting outlets opening into the venting space. A degassing space extends along the first direction besides the venting space. A plurality of separators is arranged within the venting space to sub-divide the venting space into a plurality of venting channels arranged (preferably arranged consecutively) along the first direction and being gas-tightly separated from each other by the separators. Each of the venting channels has a venting channel opening, which opens into the degassing space. The degassing space is at least partly confined by a wall comprising a collection area, the collection area being arranged opposite to each of the venting channel openings and spaced apart from each of the venting channel openings.

The battery module may be in particular adapted for being employed as a power source or as a part of a power source for a hybrid vehicle or a fully electric vehicle.

In the foregoing, the expression "venting side" is short for "venting side face," i. e., the expression refers to that side face of a prismatic battery cell that is equipped with a venting outlet, wherein it is assumed that only one of a battery cell's side faces comprises a venting outlet. Inside a battery cell, a valve is usually installed upstream of the outlet, the valve being configured to open, if the gas pressure inside the battery cell exceeds a predefined value, and to be in a closed stated otherwise.

Also, in embodiments, each or at least some of the venting sides may be essentially planar.

Further, the term "separated gas-tightly" means that venting gas in one of the venting channels cannot enter (flow) into the neighboring venting channels. In other words, any exchange of vent gas and/or particles between any two neighboring venting channels is inhibited. Thus, in that the venting channels are arranged consecutively along the first direction, an exchange of vent gas and/or particles entrained with the vent gas between any different venting channels is inhibited.

According to the aforementioned structure, vent gas (possibly including particles) being ejected, in case of a thermal event such as a thermal runaway, from the venting outlet of a battery cell enters into the venting space. In particular, the vent gas is collected first in one of the venting channels formed within the venting space by means of the separators. Then, the vent gas effuses from the respective venting channel into the degassing space via the venting channel opening of the venting channel. After this, due to the feature of the collection area being arranged opposite to each of the venting channel openings and spaced apart from each of the venting channel openings, particles entrained along with the vent gas impinge on the collection area arranged opposite to the venting channel opening of the venting channel, from which the vent gas is effused. As a consequence, the particles may stick on the collection area, while the vent gas-without the particles-may stream further through the degassing space and finally discharged from the degassing space. In other words, the particles are separated from the pure vent gas by this process enabled by the battery module as described in the foregoing. As a result, the pure vent gas is then discharged from the battery module, while the particles remain inside the battery module, where the particles remain stuck or even sintered on the collection area.

The process of the particles sticking or sintering on the collection area after having impinged against the collection area may be supported or improved by a high temperature and/or a high kinetic energy of the particles. This is normally the case during a thermal event such as a thermal runaway due to the rather high energies and pressures arising inside a battery cell during such an event, as has been already described above in the introductory part. As described below in the context of certain embodiments, the kinetic energy of the particles can even be increased by the shape of the venting channel outlet.

The term "non-parallel" with regard to two directions means that the angle between the two directions is not equal to 0° and also not equal to 180°. Further, the term "non-parallel" with regard to a direction and a plane means that the direction has an angle not equal to 0° or 180° with regard to the plane.

The improvement of the proposed solution to the above-described technical problem according to the first aspect is thus to collect the particles (in particular, metallic and graphite particles) flowing with the vent gas stream inside the battery module at an electric neutral region so as to prevent any kind of short circuit and/or arcing due to a resistive short between high voltage parts. Then, the hot metallic and graphite particles get "sintered" at an area of a wall (e. g., a metal area) and remain there stuck. Thus, these particles are then impeded from moving further and hence never exit the battery module to cause fire outside or any kind of arcing.

Thus, as one quintessence of the battery module according to the above-described first aspect can be considered the ability to stick the particles (such as metallic and graphite particles) ejected from a cell during thermal runaway inside the battery module at different locations to prevent these particles from exiting the battery module and from possibly igniting the venting gas outside of the module.

In preferred embodiments, the second direction is perpendicular to the first direction.

In one embodiment of the battery module according to the first aspect, the separators are each planar or essentially planar; and the separators are each arranged parallel to a border between two adjacent battery cells.

Here, the term "border" between two adjacent battery cells may refer to a plane between two battery cells abutting against each other in the battery cell stack or, if neighbored battery cells do not abut or not necessarily abut against each other in the battery cell stack, refers to an interstice between those neighbored battery cells.

Then, the venting outlets of one battery cell or a group of neighbored battery cells open into the same venting channel. Consequently, vent gas ejected by a specific battery cell is inhibited to come into contact with the surface of battery cells of other groups of battery cells, i. e., groups of battery cells that do not open into the venting channel, into which the vent gas of the specific battery cell is ejected.

The separators may be positioned such that groups of several battery cells are located between any two adjacent separators. For example, each of those groups may comprise 1 battery cell, 2 battery cells, 3 battery cells, 4 battery cells, 5, battery cells, or 6 battery cells. Preferably, if the battery cells in the battery cell stack are electrically connected in series, the battery cells are grouped into groups each comprising only 3 or4 battery cells. Then, the potential difference between the first and the last battery cell in the group is too small to cause arcs.

In embodiments, the planar separators may be arranged perpendicular to the first direction. Alternatively or additionally, the planar separator may be arranged parallel to the second direction.

In one embodiment, the battery module further comprises a confining means. The confining means confines at least a part of the venting space. The confining means is made of a material that is impermeable to venting particles. In other words, the confining means is suitable for shielding the venting particles and thus forms a spatial barrier for the venting particles.

In preferred embodiments, the confining means is made of a high-temperature resistant material.

In embodiments, the confining means may confine the whole venting space, except for the areas of the venting outlets on the battery cell's venting sides and the venting channel openings leading into the degassing space. In alternative embodiments, the venting space may be confined partly by the venting sides of the battery cells. Then, in such embodiments, the confining means confines the venting space in each direction, except for those inner surface areas of the venting space that are already confined by the venting sides of the battery cells and in the areas of the venting channel openings.

In embodiments, at least a part of the venting channel openings may simply be formed by a whole in the confining means in an area, where the confining means is arranged adjacent to the degassing space.

In alternative embodiments of the battery module according to the first aspect, at least for some of the venting channels, the respective venting channel opening is formed by a duct having a smaller cross-section in comparison to a cross-section of the respective venting channel.

Here, the cross-sections may each be taken along a virtual plane arranged parallel to the first and second direction. Also, the cross-sections may each be taken along a virtual plane arranged non-parallel to the third direction. Also, the cross-sections may each be taken along a virtual plane perpendicular to the third direction.

In other words, the duct is narrower than the venting channel. Hence, upon discharging vent gas via the venting channel openings from the venting channel into the degassing space, the vent gas is accelerated while flowing through the duct according to the continuity equation of continuum mechanics or fluid dynamics. As a result, the vent gas as well as the particles entrained with the vent gas can be accelerated so as to have, when leaving the venting channel opening, a sufficient kinetic energy to reach the collection area opposite to the venting channel openings on the other side (with respect to the third direction) of the degassing space. Of course, to obtain the kinetic energy of the vent gas and the particles, also the pressure of vent gas in the venting channel has to be considered, which in turn depends on the flux of the vent gas entering the venting channel, the volume of the venting chamber, and the temperature of the vent gas inside the venting channel.

In embodiments, the duct may exhibit a tapering shape, when viewed in a direction pointing from the venting channel through the venting channel opening into the degassing space (i. e., in the flow direction of the vent gas). Then, again due to the continuity equation, the vent gas including the entrained particles becomes increasingly accelerated while streaming via the tapered duct and is thus effused from the venting channel opening into the degassing space with a high velocity.

In one embodiment of the battery module, at least some of the ducts are each formed by a narrowed portion of the confining means.

In one embodiment of the battery module, the confining means comprises a first cover being spaced apart, at least partially, from the venting sides and confining the venting space with respect to the second direction.

In other words, according to such an embodiment, the venting space is located between the first cover and the venting sides of the battery cells.

The above does not exclude, in embodiments, the use of a "second cover" being arranged, as a further part of the confining means, between the venting sides of the battery cells and the venting space. In this case, a plurality of openings may be present in the second cover such that vent gas ejected from the venting outlets of one or more of the individual battery cells is able to stream into the venting space through at least one of these openings. Then, each of the openings in the second cover is preferably arranged in line with one of the venting openings of the battery cells, when viewed along a direction perpendicular to the venting sides of the battery cells. Another type of a second cover will be described later below.

In one embodiment of the battery module, the venting side of each battery cell comprises a first terminal. Further, for each of the battery cells, the first cover gas-tightly connects to the venting side of the battery cell between the position of the first terminal and the position of the venting outlet.

In such embodiments, the first terminal of each of the battery cells is shielded from the vent gas and the entrained particles by the first cover such that the vent gas and/or the particles cannot destroy or deteriorate the first terminal in case of an ejection of vent gas and/or particles out of the venting outlet.

In one embodiment of the battery module, the venting side of each battery cell comprises a second terminal. The confining means comprises a second cover. For each of the battery cells, the second cover gas-tightly connects to the venting side of the battery cell between the position of the second terminal and the position of the venting outlet.

In such embodiments, the second terminal of each of the battery cells is shielded from the vent gas and the entrained particles by the second cover such that the vent gas and/or the particles cannot destroy or deteriorate the first terminal in case of an ejection of vent gas and/or particles out of the venting outlet.

In embodiments, the first cover may be gas-tightly connected with the second cover. Then, the venting space (sub-divided into a plurality of venting channels, see above) is confined by the first cover, the second cover, and by the venting sides of the battery cells. Also, each or some of the venting channel openings may then be formed by openings in the first cover and/or by openings in the second cover. Also, each or some of the venting channel openings may be formed between the first cover and the second cover.

In one embodiment of the battery module, each or some of the ducts are formed by a space between the first cover and the second cover.

In one embodiment of the battery module, the degassing space is arranged, when viewing into a third direction oriented non-parallel to the first direction and non-parallel to the second direction, after the venting space.

The third direction may be perpendicular to the first direction. The third direction may be perpendicular to the second direction. The third direction may be perpendicular to the first direction as well as to the second direction.

In one embodiment of the battery module, each of the battery cells has a first lateral side facing into the third direction. The degassing space is arranged adjacent to the first lateral sides.

As already mentioned above, the degassing space extends along the first direction, over the length of the battery cell stack, besides the venting space. Thus, in the afore-mentioned embodiment, the degassing space extends, with regard to the third direction, with one portion (e. g., an upper portion) besides the venting space, and at the same time with another portion (e. g., a lower portion) adjacent to the first lateral sides of the battery cells comprised in the battery cell stack. Hence, in other words, with regard to the second direction, the venting space is located at the same side of the degassing space as the battery cell stack.

In one embodiment of the battery module, the collection area is essentially planar and arranged non-parallel to the third direction. Each of the venting channel openings opens into the degassing space into the third direction. The collection area is arranged spaced apart from each of the venting channel openings with regard to the third direction.

In such embodiments, vent gas including entrained particles may be effused of one or more of the venting channels via the respective venting channel openings into the third direction. As the collection area is arranged non-parallel to the third direction and opposite to each of the venting channel openings, the particles-essentially following their flow direction after having been effused into the third direction-impinge onto the collection area, where they subsequently may stick and/or become sintered. The effect becomes best, if the particles arrive on the collection area at an angle of 90°.

Hence, in preferred embodiments, the collection area may be arranged perpendicular or essentially perpendicular to the third direction. Also, in embodiments, the collection area may be arranged parallel to the first direction, i. e., parallel to the stacking direction of the battery cells. Preferably, the collection area is arranged such that the distances between each of the venting channel openings and the collection area are equal. Then, any particles, when traversing the degassing space on their trajectory from a venting channel opening to the collection area, traverse across the same distance.

In embodiments, the wall may be planar or essentially planar and arranged in the same virtual plane as the collection area.

In embodiments, the collection area may be formed integrally with the wall.

In embodiments, the first lateral sides of the battery cells may be separated from the degassing space by a shielding barrier. The shielding barrier may be made of material having only a poor heat conductivity. By the shielding barrier, the battery cells are thermically isolated or shielded from the hot venting gas collected and streaming in the degassing space.

The degassing space may comprise one or more discharge outlets configured for discharging vent gas to the outside of the battery module.

In one embodiment of the battery module according to the first aspect, the degassing space is a sidewall chamber of the battery module or a floor separation chamber of the battery module.

In embodiments, the wall comprising the collection area is a confinement (a sidewall) of the sidewall chamber of the battery module or the floor separation chamber of the battery module.

In embodiments, the wall is made of metal.

In embodiments, the collection area is made of metal.

In embodiments, the wall is additionally reinforced with a metal plate in the region of the collection area.

In embodiments, the confining means may be covered by a top cover of the battery module, the top cover being arranged opposite, with regard to the confining means, to the venting sides of the battery cells. In other words, a space present between a top cover of the battery module and the venting sides of the battery cells is used to accommodate the confining means and thus the venting space.

Note that one idea behind the proposed solution provided by a battery module according to the above-described first aspect and/or the embodiments thereof is to enable sticking and/or sintering of particles (e. g., metallic and graphite particles) entrained in the venting gas ejected from a cell during thermal runaway inside the battery module at a dedicated and electrically safe location.

A second aspect of the present disclosure is related to a battery system comprising one or more battery modules according to the first aspect or one or more of the embodiments of the first aspect.

A third aspect of the present disclosure refers to a vehicle comprising at least one battery module according to the first aspect or an embodiment of the first aspect and/or at least one battery system according to the second aspect.

The vehicle may be a hybrid vehicle or a fully electric vehicle.

### Specific Embodiments

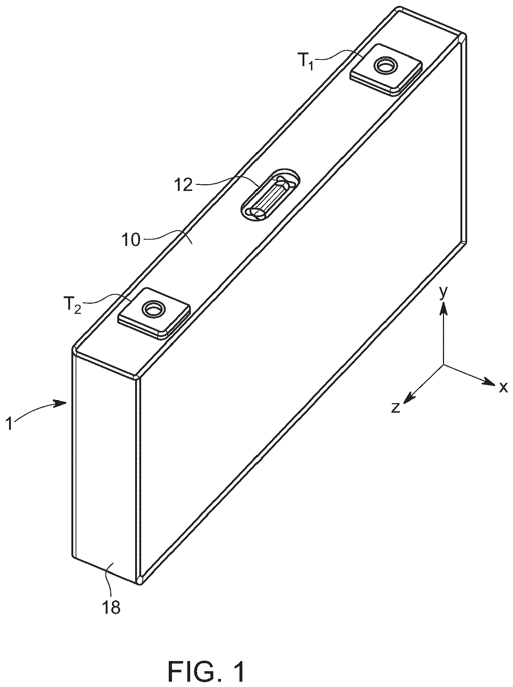

A battery module or battery system commonly comprises one or more stacks of battery cells. Usually, the individual battery cells of one of those stacks are shaped identically or essentially identically to each other. As an example, the design of a typical state-of-the-art battery cell 1 used in a battery cell stack is schematically illustrated in Figure 1 with reference to a Cartesian coordinate system in a perspective view. The battery cell 1 has a prismatic (cuboid) shape. On an upper side surface 10 of the battery cell 1 (i. e., the battery cell's side surface facing into the y-direction of the coordinate system), a first terminal T₁ and a second terminal T₂ are arranged. The terminals T₁, T₂ allow for an electrical connection of the battery cell 1. The first terminal T₁ may be a negative terminal of the battery cell 1, and the second terminal T₂ may be a positive terminal of the battery cell 1. Furthermore, between the first terminal T₁ and the second terminal T₂, a venting outlet 12 is arranged on the upper side surface 10. Accordingly, the upper side surface 10 will in the following be referred to as the "venting side" of the battery cell 1.

Through the venting outlet 12, vent gas can be ejected from the battery cell 1 in case of a thermal event occurring in the battery cell 1 such as a thermal runaway. Inside the battery cell 1, a valve (not shown) is usually installed upstream of the venting outlet 12, the valve being configured to open, if the gas pressure inside the battery cell 1 exceeds a predefined value, and to remain in a closed stated otherwise, i. e., when the gas pressure inside the battery cell 1 is below the predefined value. Thus, before being output via the venting outlet 12, the vent gas may pass the venting valve arranged inside the battery cell 1.

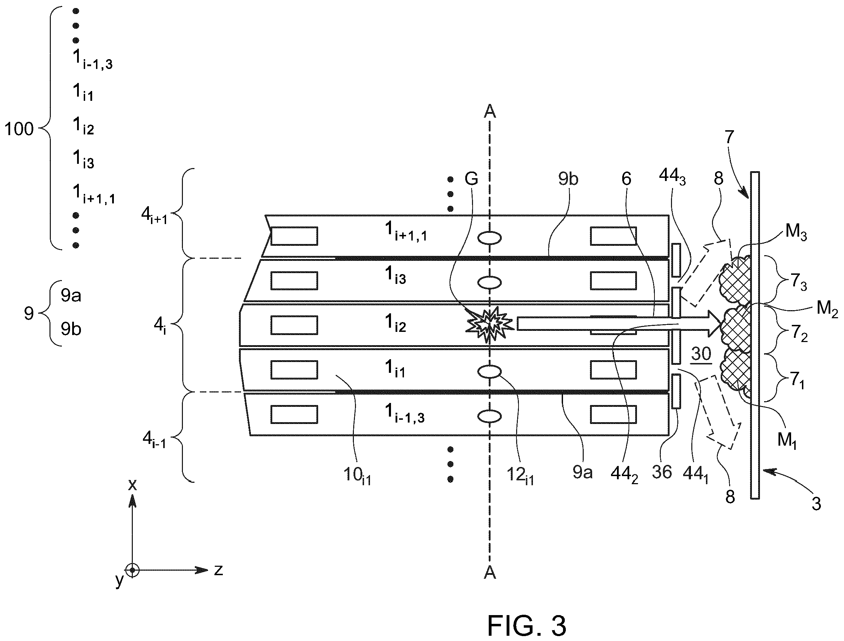

By stacking together a plurality of battery cells each being designed like the battery cell 1 shown in Fig. 1 along a first direction parallel to the axis x of the coordinate system, a stack of battery cells is created like, e. g., a stack 100 comprising the battery cells 1_{i-1,3}, 1ᵢ₁, 1ᵢ₂, 1ᵢ₃, and 1_{i+1,1} schematically depicted in Fig. 3.

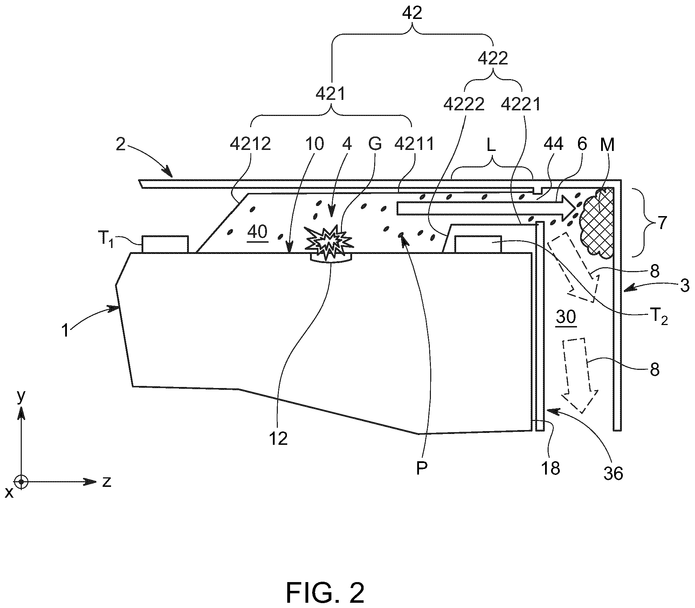

Figure 2 illustrates a schematic cross-section of a battery module according to an embodiment of the invention. Here, the cross-section is taken through one of the battery cells aligned in a battery cell stack along a first direction x like, e. g., the battery cell stack 100 depicted in Fig. 3 described later. In the y-direction, the battery module is confined by a top wall 2. In the z-direction, the battery module is confined by a side wall 3. In Fig. 2, the battery cell 1 may be shaped identically or similar to the battery cell 1 described above with reference to Fig. 1. The battery cell 1 is shown in a state of the thermal event. Thus, hot vent gas G having been generated inside the battery cell 1 is ejected out of the battery cell 1 via the venting opening 12 arranged in the venting side 10 of the battery cell 1. This is indicated here by the schematic flame depicted above the venting opening 12. As further indicated by small dots, particles P such as metallic and/or graphite particles may be entrained with the vent gas. When electrical installations and members such as the first and second terminals T₁, T₂ of the battery cell 1 as well as in other regions of the battery module (e. g., busbars electrically interconnecting the terminals of different battery cells or measurement means such as temperature sensors; not shown) come into contact with the vent gas G, these electrical installations and members may be seriously deteriorated or even completely destroyed by the vent gas G and/or the particles P carried along with the vent gas G.

However, the ejected vent gas G cannot move freely around within the battery module, as it is first collected in a venting space 40 arranged above the battery cell's venting side 10. The venting space 40 is located in the void between the venting side 10 and the battery module's top wall 2. Further, in the shown embodiment, the venting space 40 is confined by a confining means 42. The confining means 42 is preferably made of a high-temperature resistance material. Also, the material of the confining means 42 is preferably electrical insulating. Then, arcing between the top wall 2 and high voltage parts (e. g., busbars) of the battery cell is prevented.

In the embodiment, the confining means 42 comprises a first cover 421 being spaced apart, at least partially, from the venting side 10, with regard to the y-direction. The first cover 421 comprises, with regard to the orientation of the battery module as shown in Fig. 2, a horizontal portion 4211 extending under an area of the top wall 2, and an inclined portion 4212 being inclined with respect to the venting side 10 and connected to the latter between the venting opening 12 and the first terminal T₁ besides the first terminal T₁. The connection of the inclined portion 4212 of the first cover 421 extends along the x-direction across the whole area of the battery cell's venting side 10. This way, the venting space 40 is also confined against the z-direction before the position of the first terminal T₁. Thus, the first terminal T₁ is shielded from the hot vent gas G collected above the venting side 10 of the battery cell 1 as well as from particles carried along with the vent gas G.

Similarly, in the embodiment shown in Fig. 2, the confining means 42 further comprises a second cover 422 being spaced apart, at least partially, from the venting side 10, with regard to the y-direction. The second cover 422 comprises, with regard to the orientation of the battery module as shown in Fig. 2, a horizontal portion 4221 extending above an area of the venting side 10, where the second terminal T₂ is arranged, and an inclined portion 4222 being inclined with respect to the venting side 10 and connected to the latter between the venting opening 12 and the second terminal T₂ besides the second terminal T₂. The connection of the inclined portion 4222 of the second cover 422 extends along the x-direction across the whole area of the battery cell's venting side 10. This way, the venting space 40 is also confined, at least partially (i. e., except for venting channel openings 44 described later), in the z-direction before the position of the second terminal T₂. Thus, the second terminal T₂ is also shielded from the hot vent gas G collected above the venting side 10 of the battery cell 1 as well as from particles carried along with the vent gas G.

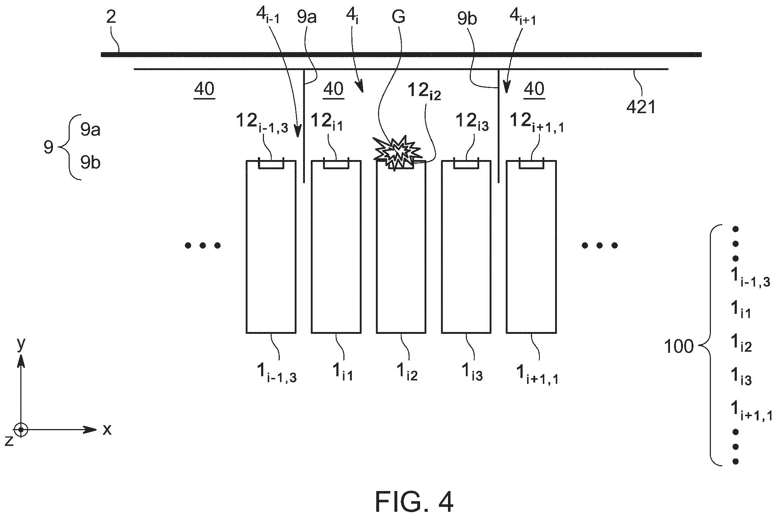

Furthermore, as will be described in further detail below with reference to Figs. 3 and 4, the venting space 40 confined by the confining means 42 is sub-divided (by a number of separators 9a, 9b) into a plurality of compartments or chambers being consecutively arranged parallel the x-direction of the coordinate system (not visible in Fig. 2). In other words, each of these compartments or chambers is confined, with regard to any cross-section parallel to the y-z-plane of the coordinate system, by the confining means 42 as described above, and further, with regard to the x-direction, by two neighbored separators 9a, 9b. Thus, the cross-section taken perpendicular to the x-direction (between two neighbored separators) of one of those compartments or chambers 4 is identical with the cross-sectional profile of the venting space 40, as can be seen in Fig. 2. Each of these compartments or chambers 4, 4ᵢ₋₁, 4ᵢ, 4ᵢ₊₁ (see also Fig. 4) comprises one or more openings 44, through which vent gas G as well as particles P entrained with the vent gas G can escape. By the positions of the one or more openings 44, the outflow direction of the vent gas G is determined. Hence, the compartments or chambers 4, 4ᵢ₋₁, 4ᵢ, 4ᵢ₊₁ each act as a venting channel, within which vent gas G and particles P ejected from one or more battery cells 1 arranged below the venting channel is first collected, and through which the vent gas G and the particles P are then guided to the outside of the venting channel in a predefined direction. Thus, the compartments or chambers as described above are thus referred to as venting channels 4, 4ᵢ₋₁, 4ᵢ, 4ᵢ₊₁ in the following, and the openings configured for the effusion of the vent gas G will accordingly be referred to as venting channel openings 44.

The cross-sectional profile of venting channel 4 can be taken from Fig. 2. Specifically, in the embodiment according to Fig. 2, a venting channel opening 44 is arranged such in the confining means 42, that vent gas G and particles P are guided into the z-direction when escaping from the venting channel 4 (indicated by arrow 6 in Fig. 2), i. e., vent gas G and particles P leave the venting channel 4 in a direction perpendicular to the direction of the battery cell stack (which is arranged along the x-direction). In the example, the venting channel opening 44 is formed, in a region L along the z-direction, between a portion of the first cover 421 and a portion of the second cover 422 of the confining means 42. Hence, in the example, the venting channel opening 44 forms a duct extending, L along the z-direction, in the region L. When viewing against the z-direction, various shapes of the venting channel opening 44 are possible. In particular, the venting channel opening 44 may have a circular shape, when viewing against the z-direction. Then, in the example, any cross-section profile of the duct (the cross-section taken parallel to the y-z-plane of the coordinate system, i. e., parallel to the drawing plane of Fig. 2) formed by venting channel opening 44 may exhibit a circular shape. Alternatively, also other shapes of the venting channel opening 44 (when viewing against the z-direction) may be used, for example, a square shape, a rectangular shape, a slit shape, or an oval shape.

Generally, the smaller the cross-sectional profile of the venting channel opening 44 (with regard to the x-y-plane of the coordinate system), the larger will be the outflow velocity of the vent gas G and the particles P effused from the venting channel opening 44 (for a certain pressure of the vent gas G inside the venting channel 4, which in turn depends on the volume of the interior of venting channel 4 and the temperature of the vent gas G inside the venting channel 4). Thus, by choosing the cross-section of the venting channel opening 44, the outflow velocity of the vent gas G and the particles P can be controlled.

Also, alternatively to the shape of the venting channel opening 44 shown in Fig. 2, the duct formed by the venting channel opening 44 may taper, when viewing from the venting channel 4 into the z-direction. Then, the molecules of the vent gas G and the particles P become accelerated while passing through the duct such that their kinetic energy will be increased.

Each of the venting channel openings 44 opens into a degassing space 30, which extends, with regard to the orientation of the battery module as depicted in Fig. 2, on the right side of the battery cell stack 100 and thus on the right side of the individual battery cell 1. In the depicted example, the degassing space 30 is confined, on the right side (i. e., in the z-direction), by the wall 3. On the top side (i. e., in the y-direction), the degassing space is confined by the top wall 2. In the example, the degassing space 30 is a sidewall chamber of the battery module. With regard to the y-direction, the degassing space 30 extends, with a lower portion, along a lateral side 18 of battery cell 1, and with an upper portion besides the venting channel 4 such that the venting channel opening 44 connects the venting channel 4 with the degassing space 30. Hence, after being effused from the venting channel opening 44, the vent gas G is collected in the degassing space 30. The degassing space 30 may further comprise a discharge outlet (not shown) configured for finally discharging the vent gas G to the outside of the battery module. For example, with regard to Fig. 2, the discharge outlet may be arranged in an area somewhere below the region depicted in Fig. 2. Accordingly, the vent gas G is guided against the y-direction inside the degassing space 30 as indicated by the arrows 8 and thus perpendicular to the outflow direction (z-direction) of the vent gas G upon being effused from the venting channel opening 44 been indicated by the arrow 6. In other words, after being effused from the venting channel opening 44, the flow direction of the vent gas G (more precise: the flow direction of the molecules of the vent gas G) is deflected from the z-direction into a direction against the y-direction such the flow trajectory of the vent gas molecules is curved, in particular within the upper portion of the degassing space 30.

Moreover, the lateral side 18 of the battery cell 1 is separated from the degassing space 30 by a shielding barrier 36. The shielding barrier 36 is preferably made of a material having only a poor heat conductivity. By the shielding barrier 36, the battery cell 1 is thermically isolated or shielded from the hot venting gas G collected and streaming in the degassing space 30 as indicated by the arrows 8.

However, the metallic or graphite particles P entrained with the vent gas G are small lumps of solid material. Hence, the particles P have a much higher weight than the molecules of the vent gas G. Accordingly, inertia makes it much harder for these particles P to be deflected from their trajectory than for the vent gas molecules. Thus, the trajectory of the particles P exhibits no or just the very small curvature after being effused from the venting channel opening 44. Consequently, the particles P (or at least the majority of the particles P) do not manage to change their trajectory so to follow the direction of flow in the degassing space, i. e., against the y-direction. Instead, the particles P cross the entire interior of the degassing space 30 with regard to the z-direction and finally meet an upper area of the wall 3 confining the degassing space 30 on the right side with regard to the orientation of Fig. 2. In the following, the upper area of wall 3, where the particles P impinge the wall 3 will be referred to as collection area 7. After the particles P hit the collection area 7, the particles P will remain stuck on the collection area 7 and may become sintered there. Consequently, the particles P will no longer be carried along with the vent gas G. As a result, the vent gas G guided through the remaining part of the degassing space 30 (i. e., with regard to Fig. 2, in the portion of the degassing space 30 below the collection area 7) has been separated from the particles P such that, when the vent gas G is discharged from the degassing space 30 (and thus from the battery module), the vent gas G entering the outside of the battery module is free of metallic and graphite particles P or at least cleaned for the most part from the particles P. The afore-described effect (i. e., the sticking and sintering of the particles P on the collection area 7) succeeds the better, the hotter the temperature and the velocity of the particles P. Thus, it is preferable that the vent gas G including the particles P are ejected from the venting channel opening 44 with his sufficient velocity (kinetic energy), which may be supported by certain shapes of the venting channel opening 44 as described above.

Figure 3 provides a further schematic cross-section of the embodiment of the battery module illustrated in Fig. 2. In Fig. 3, the cross-section is taken perpendicular to the y-direction through the venting space 40, i. e., with regard to Fig. 2, approximately along the arrow 6 indicating the flow direction of the vent gas G and the particles P through the venting channel opening 44. Specifically, Fig. 3 shows the arrangement of the plurality of individual battery cells 1_{i-1,3}, 1ᵢ₁, 1ᵢ₂, 1ᵢ₃, 1_{i+1,1} (each of them may be shaped identically or similar to the battery cell 1 described above with reference to Fig. 1) as a stack 100 of battery cells orientated along the x-direction. In particular, Fig. 3 provides a top view onto the battery cell stack 100. Of course, the battery cell stack 100 may comprise more battery cells, which is indicated by the dots below and above the shown battery cells in Fig. 3. In the shown embodiment, a first separator 9a is arranged between the battery cell 1_{i-1,3} depicted lowermost in Fig. 3 and the battery cell 1ᵢ₁ placed next to battery cell 1_{i-1,3} when viewed along the x-direction. Similarly, a second separator 9b is positioned between the battery cell 1_{i+1,1} depicted uppermost in Fig. 3 and the battery cell 1ᵢ₃ placed next to battery cell 1_{i+1,1} when viewed against the x-direction. Thus, a group of the battery cells comprising the battery cells battery cells 1ᵢ₁, 1ᵢ₂, 1ᵢ₃ is located between the first separator 9a and the second separator 9b. This scheme may be continued in the x-direction and against the x-direction along the complete length of the battery cell stack 100. For example, the battery cell stack 100 may comprise a number of 3N battery cells, and any group of three neighbored battery cells may be located between two separators. Then, the battery cell stack 100 comprises N groups of battery cells, which may be indicated by a number i ∈ {1, ..., N}. In Fig. 3, the group battery cells 1ᵢ₁, 1ᵢ₂, 1ᵢ₃ may then be the i-th group in such a battery cell stack. Further, each of the separators may extend, in the z-direction, along the border between two adjacent battery cells.

In Fig. 3, the battery cell 1ᵢ₂ being centered in the shown cut-out of the battery cell stack 100 undergoes a thermal event, while the remaining battery cells 1_{i-1,3}, 1ᵢ₁, 1ᵢ₃, 1_{i+1,1} are in a normal state. Thus, battery cell 1ᵢ₂ can be identified with the battery cell 1 of Fig. 2. Accordingly, hot vent gas G is ejected from battery cell 1ᵢ₂, which is again indicated by a flame symbol. The ejected vent gas G collects in the venting space 40 as described above with reference to Fig. 2. In particular, the venting space 40 is confined, with regard to the y-direction and the z-direction, by a first cover 421 (not shown in Fig. 3) and the second cover 422 (not shown in Fig. 3) of the confining means 42. However, along the x-direction, the venting space 40 is sub-divided into a plurality of venting channels by a number of separators. In Fig. 3, the venting channel 4, is formed between the first separator 9a and the second separator 9b. When battery cell 1ᵢ₂ is identified with the battery cell 1 of Fig. 2, the venting channel 4ᵢ in Fig. 3 corresponds to the venting channel 4 of Fig. 2. In the x-direction, the further venting channel 4ᵢ₊₁ (see also Fig. 4) is arranged between the second separator 9b and a further separator (not shown). Correspondingly, another venting channel 4ᵢ₋₁ (see also Fig. 4) is arranged between the first separator 9a and another separator (not shown).

The venting channels 4ᵢ₋₁, 4ᵢ, 4ᵢ₊₁ are separated gas-tightly from each other by the separators 9a, 9b. Thus, venting gas collected in the venting channel 4ᵢ after being ejected from battery cell 1ᵢ₂ cannot get into one or both of the neighbored venting channels 4ᵢ₋₁, 4ᵢ₊₁. Thus, at maximum the battery cells 1ᵢ₁, 1ᵢ₃ directly neighbored to the battery cell 1ᵢ₂ may be affected by the vent gas, as they are comprised in the same i-th group of battery cells of the battery cell stack 100 as battery cell 1ᵢ₂. All remaining battery cells in the battery cell stack 100 are shielded from the vent gas, as the vent gas is impeded from entering into the venting channels arranged adjacent to their respective venting sites.

Moreover, the vent gas can only exit the venting channel 4ᵢ through the one or more venting channel openings 44₁, 44₂, 44₃ arranged in the confining means 42 as described above in the context of Fig. 2. Here, one venting channel opening is provided per battery cell. So, with respect to the x-direction, venting channel opening 44, is arranged in the area of battery cell 1ᵢ₁, venting channel opening 44₂ is arranged in the area of battery cell 1ᵢ₂, and venting channel opening 44₃ is arranged in the area of battery cell 1ᵢ₃. However, the number of venting channel openings provided for venting channel needs not necessarily correspond to the number of battery cells arranged below this venting channel. Here, venting channel opening 44₂ of Fig. 3 may correspond to venting channel opening 44 of Fig. 2. As already described with reference to Fig. 2, the vent gas including the entrained particles leaves the venting channel 4ᵢ through the venting channel openings. As the gas pressure of the vent gas G is equal everywhere inside the venting channel 4ᵢ, the vent gas streams out of the venting channel 4ᵢ through each of the venting channel openings 44₁, 44₂, 44₃.

Thus, from any of the venting channel openings 44₁, 44₂, 44₃ of venting channel 4ᵢ, vent gas including particles is effused into the degassing space 30 into the z-direction. However, due to the trajectories of the vent gas molecules and the particles being different due to the different material properties of the vent gas molecules and the particles (see the detailed explanation above in the context of Fig. 2), the particles become separated from the vent gas, impinge against the collection area 7 of the wall 3, where they finally sinter and remain stuck. As particles are ejected from each of the venting channel openings 44₁, 44₂, 44₃ of venting channel 4ᵢ, three clusters M₁, M₂, M₃ may be deposited in corresponding regions 7₁, 7₂, 7₃ opposite to the venting channel openings 44₁, 44₂, 44₃ on the collection area 7.

Afterwards, the remaining vent gas being cleaned from the particles is guided through the degassing space 30 until it reaches one or more discharge outlets (not shown), through which the vent gas becomes discharged to the outside of the battery module. Within the degassing space 30, the vent gas may be guided in any direction perpendicular to the streaming direction of the vent gas upon being effused from venting channel openings 44₁, 44₂, 44₃ (indicated by arrow 6), i. e., in any direction perpendicular to the z-direction (as indicated by the arrows 8 in Figs. 2 and 3).

The above description as to Fig. 2 and 3 can be summarized as follows: Hot venting gas G and particles P ejected from the battery cell 1 (1ᵢ₂) in the state of a thermal event (such as a thermal runaway) will exit the battery cell 1 (1ᵢ₂) at the location of the venting outlet 12 (12ᵢ₂) and will be guided by the venting channel 4 (4ᵢ) formed by a (preferably heat resistant and electrical insulating) confining means 42 (here comprising a first cover 421 and a second cover 422) into the degassing space 30, which may be a sidewall chamber of the battery module. Because of the hot temperature and high speed, the metallic and graphite particles P will sinter on the collection area 7 of the wall 3 and will remain stuck there. This is indicated in Fig. 2 by the deposit of accumulated material M opposite to venting channel opening 44 and in Fig. 3 by the deposit M₂ of sintered material in the region 7₂ of the collection area 7 located opposite to the venting channel opening 44₂. In case of a thermal event in other battery cells, the particles of these cells will (mainly) impinge and stick on other areas of the collection area 7. For example, particles ejected from battery cells 1ᵢ₁ and 1ᵢ₃ will (mainly) impinge onto the regions 7, and 7₃ of the collection area 7, respectively, and finally stick and sinter on these locations.

All sintered particles will never reach the exit of the battery module or the battery pack, within which the battery module is comprised. Thus, the discharge channels always remain clean in case more or even all of the battery cells are triggered in the course of a thermal propagation. Moreover, the discharge channel formed by the degassing space 30 in the sidewall of the battery module becomes only partly blocked at those regions 7, 7₁, 7₂, 7₃, where the particles ejected from the battery cells have been accumulated. The reason is that the stuck material remains always (mainly) next to the battery cell (in a first deposit), from which it has been ejected, while the ejected particles of each of the other venting battery cells will cause particle deposition inside the degassing space (mainly) only besides (i. e., parallel to) the first deposit.

Moreover, as the degassing space (and in particular the wall 3 comprising the collection area 7) is at the electrical potential of the vehicle's chassis, while the high voltage sections of the battery cells are each insulated, an arc down to the chassis cannot happen.

Of course, as the only exits of the venting space 40 are built by the venting channel openings 44 leading into the degassing space 30, not only the terminals T₁, T₂ are protected from vent gas G and particles, but also other electrical installations and members (see above), as vent gas G and particles P can only be present within the venting space 40 and the degassing space 30.

The remaining venting gas G with some rest of dust (particles) will exit the battery module through the lower portion of the venting space 30 arranged in the battery cell's sidewall chamber. After being exited from the battery module, the cleaned vent gas may still pass a main venting unit (not shown), before finally exiting into the ambient air.

Figure 4 supplements the foregoing figures in that it provides a further schematic cross-sectional view of the battery module according to the embodiment shown in Figs. 2 and 3 being taken parallel to the x-y-plane of the coordinate system along the axis indicated by A - A in Fig. 3. Again, the five consecutively arranged battery cells 1_{i-1,3}, 1ᵢ₁, 1ᵢ₂, 1ᵢ₃, 1_{i+1,1} comprised in battery cell stack 100 are depicted, wherein the battery cell stack 100 extends along the x-direction. The presence of further battery cells (not shown) in and against the x-direction is indicated by the triple dots. In Fig. 4, the battery cells are depicted with the little interstice between any two adjacent battery cells. The interstice may be exaggerated in the drawing. However, in embodiments, adjacent battery cells may also directly abut against each other such that no interstice is present between adjacent battery cells. On the other hand, when and interstice is present between two adjacent battery cells, the space between the two battery cells may be filled by a material, for example, by an adhesive, with which the two battery cells are glued to each other. In any case, the void space between two adjacent battery cells should be avoided.

Above the venting sides 12_{i-1,3}, 12ᵢ₁, 12ᵢ₂, 12ᵢ₃, 12_{i+1,1} of the plurality of battery cells 1_{i-1,3}, 1ᵢ₁, 1ᵢ₂, 1ᵢ₃, 1_{i+1,1}, the venting space 40 is arranged, which extends, along the y-direction, between the venting sides 12_{i-1,3}, 12ᵢ₁, 12ᵢ₂, 12ᵢ₃, 12_{i+1,1} and the first cover 421 of confining means 42, wherein the first cover 421 extends in turn below the top wall 2 of the battery module. Along the x-direction, the venting space 40 is gas-tightly sub-divided into a plurality of venting channels 4₁, 4₂, 4₃ such that any exchange of vent gas (including particles; not shown in Fig. 4 for the sake of simplicity) between the individual venting channels 4₁, 4₂, 4₃ is prohibited. Accordingly, each of the venting channels 4₁, 4₂, 4₃ is confined in the x-direction by a separator, against the x-direction by a further separator, in the y-direction, as described already in the context of Fig. 2, by the first cover 421 of confining means 42, and against the y-direction by venting sides of the battery cells being positioned between the aforementioned separators. For example, with reference to the orientation of the battery module in Fig. 4, the venting channel 4₂ is confined at the bottom by the venting sides 12ᵢ₁, 12ᵢ₂, 12ᵢ₃ of battery cells 1ᵢ₁, 1ᵢ₂, 1ᵢ₃, at the top by the first cover 421, on the left side by the first separator 9a, and on the right side by the second separator 9b.

The plurality of battery cells is arranged in the battery cell stack 100 as described before with reference to Fig. 2. Specifically, the battery cells are grouped into groups of three battery cells each, wherein each of the groups, with regard to the x-direction, is located between two separators. For example, the i-th group comprised in the battery cell stack 100 containing the battery cells 1ᵢ₁, 1ᵢ₂, 1ᵢ₃ is located between the first separator 9a and the second separator 9b, which each extends along a virtual plane perpendicular to the drawing plane of Fig. 4. The separators may extend into the interstices between adjacent battery cells. For example, as depicted in Fig. 4, the first separator 9a may protrude into the interstice between the battery cells 1_{i-1,3} and 1ᵢ₁, and the second separator 9b may protrude into the interstice between the battery cells 1ᵢ₃ and 1_{i+1,1}. However, in other embodiments, the separators 9a, 9b may not protrude below the plane, along which the venting sides 12_{i-1,3}, 12ᵢ₁, 12ᵢ₂, 12ᵢ₃, 12_{i+1,1} of the battery cells 1_{i-1,3}, 1ᵢ₁, 1ᵢ₂, 1ᵢ₃, 1_{i+1,1} are arranged.

Finally, it shall be noted that a dedicated electrically insulated venting channel into the sidewall of a battery module may have at least some of the following features and/or advantages:
- Hot (metallic and graphite) particles P are "stored" locally next the battery cell 1, 1ᵢ₂ ejecting these particles P inside the degassing space 30.
- Each battery cell 1ᵢ₁, 1ᵢ₂, 1ᵢ₃, from which vent gas G and particles P are ejected, generates an individual location 7₁, 7₂, 7₃, where the particles of this cell are mainly deposited.
- Ejected particles remain P stuck at locations (7, 7₁, 7₂, 7₃) inside the battery module, thus reducing the risk of outside fire.

- The degassing space 30 is usually not heavily loaded by clusters or piles of deposited material M₁, M₂, M₃, thus, enough discharging space remains available within the degassing space 30 even in case that a plurality or all of the battery cells 1_{i-1,3}, 1ᵢ₁, 1ᵢ₂, 1ᵢ₃, 1_{i+1,1} is affected by a thermal runaway.
- No risk or at least considerably reduced risk of short circuits or arcing, as the sintered conductive stuff M, M₁, M₂, M₃ is stored in the degassing space 30 and thus remains inside the battery module.
- High voltage parts within the battery module or the battery pack (e. g., the terminals T₁, T₂ of a battery cell) are electrically insulated by the confining means 42 (and specifically, e. g., by the first cover 421, the second cover 422, and the first and second separators 9a, 9b) from the chassis potential.
- A multiplicity of battery cells undergoing a thermal runaway will pile up the sintered dust along the direction (e. g., the x-direction), along which the battery cell stack 100 is oriented.
- The risk of gas ignition outside the battery module (and thus also outside the battery pack) because of hot particles P exiting the battery system (through a discharge valve; not shown) into free ambient air is drastically reduced.
- Metal plates the inner side of wall 3, and in particular in the region of the collection area 7, may help to cool down the hot venting gas G to exit with a much lower temperature, thereby considerably reducing the risk of self-ignition.

### Reference signs

- 1: battery cell
- 1_{i-1,3}, 1ᵢ₁, 1ᵢ₂, 1ᵢ₃, 1_{i+1,1}: battery cells
- 2: top wall
- 3: side wall
- 4: venting channel
- 4ᵢ₋₁, 4ᵢ, 4ᵢ₊₁: venting channels
- 6: arrows indicating vent gas flow within the venting channel and within the venting channel opening
- 7: collection area
- 7₁, 7₂, 7₃: regions on collection area
- 8: arrows indicating vent gas flow in degassing space
- 9a, 9b: separators
- 10: venting side of battery cell
- 10ᵢ₁: venting side of battery cell
- 12: venting outlet
- 12_{i-1,3}, 12ᵢ₁, 12ᵢ₂, 12ᵢ₃, 12_{i+1,1}: venting outlets
- 18: lateral side of battery cell
- 30: degassing space
- 36: shielding barrier
- 40: venting space
- 42: confining means
- 44: venting channel opening
- 44₁, 44₂, 44₃: venting channel openings
- 100: battery cell stack
- 421: first cover
- 422: second cover
- 4211: horizontal portion of first cover
- 4212: inclined portion of first cover
- 4221: horizontal portion of second cover
- 4222: inclined portion of second cover

- A - A: indication of cross-section
- G: venting gas
- M, M₁, M₂, M₃: particle deposits / particle clusters
- P: particles
- T₁: first terminal
- T₂: second terminal
- x, y, z: axes of a Cartesian coordinate system

## Claims

1. A battery module, comprising:
a battery cell stack (100), the battery cell stack comprising a plurality of battery cells (1) being arranged along a first direction (x);
each of the battery cells (1) having a venting side (10);
each of the venting sides (10) facing into a second direction (y), the second direction (y) being oriented non-parallel to the first direction (x);
each of the venting sides (10) comprising a venting outlet (12);
a venting space (40) extending along the battery cell stack (100) adjacent to the venting sides (10), each of the venting outlets (12) opening into the venting space (40);
a degassing space (30) extending along the first direction (x) besides the venting space (40);
a plurality of separators (9) arranged within the venting space (40) and sub-dividing the venting space (40) into a plurality of venting channels (4) arranged along the first direction (x) and being gas-tightly separated from each other by the separators (9),
wherein each of the venting channels (4) has a venting channel opening (44), which opens into the degassing space (30);
wherein the degassing space (30) is at least partly confined by a wall (3) comprising a collection area (7), the collection area (7) being arranged opposite to each of the venting channel openings (44) and spaced apart from each of the venting channel openings (44).

2. The battery module according to claim 1,
wherein the separators (9) are each planar or essentially planar; and
wherein the separators (9) are each arranged parallel to a border between two adjacent battery cells (1).

3. The battery module according to claim 1 or 2, further comprising a confining means (42) configured for spatially confining at least a part of the venting space (40).

4. The battery module according to any one of claims 1 to 3,
wherein at least for some of the venting channels (4), the respective venting channel opening (44) is formed by a duct having a smaller cross-section in comparison to a cross-section of the respective venting channel (4).

5. The battery module according to claim 4, wherein at least some of the ducts are each formed by a narrowed portion of the confining means.

6. The battery module according to any one of claims 3 to 5, wherein the confining means (42) comprises a first cover (421) being spaced apart, at least partially, from the venting sides (10) and confining the venting space (40) with respect to the second direction (y).

7. The battery module according to claim 6,
wherein the venting side (10) of each battery cell (1) comprises a first terminal (T₁); and
wherein, for each of the battery cells (1), the first cover (421) gas-tightly connects to the venting side (10) of the battery cell (1) between the position of the first terminal (T₁) and the position of the venting outlet (12).

8. The battery module according to any one of claims 3 to 7,
wherein the venting side (10) of each battery cell (1) comprises a second terminal (T₂);
wherein the confining means (42) comprises a second cover (422); and
wherein, for each of the battery cells (1), the second cover (422) gas-tightly connects to the venting side (10) of the battery cell (1) between the position of the second terminal (T₂) and the position of the venting outlet (12).

9. The battery module according to claim 8, as far as depending on claim 4,
wherein each or some of the ducts are formed by a space between the first cover (421) and the second cover (422).

10. The battery module according to any one of claims 1 to 9 wherein the degassing space (30) is arranged, when viewing into a third direction (z) oriented non-parallel to the first direction (x) and non-parallel to the second direction (y), after the venting space (40).

11. The battery according to claim 10,
wherein each of the battery cells (1) has a first lateral side (18) facing into the third direction (z); and
wherein the degassing space (30) is arranged adjacent to the first lateral sides (18).

12. The battery module according to claim 10 or 11,
wherein the collection area (7) is essentially planar and arranged non-parallel to the third direction (z);
wherein each of the venting channel openings (44) opens into the degassing space (30) into the third direction (z); and
wherein the collection area (7) is arranged spaced apart from each of the venting channel openings (44) with regard to the third direction (z).

13. The battery module according to any one of claims 1 to 12, wherein the degassing space (30) is a sidewall chamber of the battery module or a floor separation chamber of the battery module.

14. A battery system comprising one or more battery modules according to any one of claims 1 to 13.

15. A vehicle comprising at least one battery module according to any one of claims 1 to 13 and/or at least one battery system according to claim 14.
